Europäisches Patentamt

European Patent Office

Office européen des brevets

(11) Publication number: **0 157 431**
**A1**

# EUROPEAN PATENT APPLICATION

(21) Application number: **85200078.5**

(22) Date of filing: **25.01.85**

(51) Int. Cl.⁴: **G 01 B 11/10**

(30) Priority: **20.02.84 IT 8332384**

(43) Date of publication of application: **09.10.85**
**Bulletin 85/41**

(84) Designated Contracting States: **AT DE FR GB**

(71) Applicant: **CEDA S.p.A., Via Nazionale, I-33042 Buttrio (Udine) (IT)**

(72) Inventor: **Della Vedova, Ferruccio, Via Lignano, 2 Fraz. Zugliano, I-33050 Pozzuolo Del Friuli (IT)**

(74) Representative: **Petraz, Gilberto Luigi, G.L.P. S.a.s. di Gilberto Petraz P.le Cavedalis 6/2, I-33100 Udine (IT)**

(54) **Procedure to measure the dimensions of a body in movement in a three-dimensional field, and an optoelectronic device to carry out such procedure.**

(57)    This invention concerns a procedure to measure the dimensions of a body (2) in movement, the procedure being performed by projection of an image of such body (2) onto a linear sensor (9) and by selection of rays parallel to an optical axis (10) by means of a telecentric filter (6), the rays being made parallel downstream of the telecentric filter (6) for projection onto the sensor (9).

The invention concerns also an optoelectronic device which carries out such procedure and comprises a front lens (5), a telecentric filter (6) consisting of a stop, and a linear sensor (9), the device including also a rear lens (7) positioned downstream of the stop (6) and having a focus coinciding with the aperture of the stop (6).

"PROCEDURE TO MEASURE THE DIMENSIONS OF A BODY IN MOVEMENT IN A THREE-DIMENSIONAL FIELD, AND AN OPTOELECTRONIC DEVICE TO CARRY OUT SUCH PROCEDURE"

This invention concerns a procedure to measure the dimensions of a body in movement in a three-dimensional field. To be more exact, the invention concerns a procedure suitable to measure a dimension, such as a diameter, of a body in movement in a three-dimensional field without contacting such body.

This may be necessary when measuring the diameters or thicknesses of rolled sections during hot rolling or of other objects of which the measurement by contact is difficult if not impossible.

The invention also concerns a device to carry out the above procedure.

As we said above, the invention is applicable in particular to the measurement, without contact, of the dimensions of sections of rolled sections or bars during hot rolling or drawing operations and in general in all cases where it is desired to measure a diameter or a thickness of a body in movement (or, of course, a still body) in a delimited space provided that the axis of the body in its movement is kept substantially parallel to a given direction at a right angle to the diameter or thickness which it is desired to measure.

According to the known art, when it is not possible to em-

ploy contact devices such as gauges or micrometers, the measurement of the diameter or thickness of a body can be performed by means of optical devices.

For instance, devices for the measurement of diameters are known which employ the mechanical modulation of a laser beam. The latter forms a luminous pencil which is moved along the body to be measured by means of mechanical means such as rotary mirrors, deflectors, etc.

The reading is performed, for instance, on the time of the obscuring of a sensor, the speed of displacement of the luminous beam being known.

The limitations of such known systems arise from the lack of precision of the mechanical system employed and, in particular, of the optical units. Moreover, such known devices are expensive and delicate.

Other known optical devices make use of the principle of the camera or cinematograph camera. The image of the body to be measured is focused by means of a suitable optical system onto a sensor element consisting of a great number of photo-sensitive elements arranged in line and spaced at known distances.

By obtaining a great contrast between the image of the body being measured and its surroundings, this being a thing which can be done by placing an evenly illuminated background surface behind the body, it is relatively easy to pick out on the sensor the image of the body to be measured.

Measurement is performed by counting the number of photosensitive elements obscured by the image of the body on the sensor.

Moreover, according to this known art, when a simple photographic lens is used for the measurement, the ratio between the dimension of the body and the dimension of the image is not constant. The reason for this is that the ratio of magnification (or reduction) of the optical system depends on the ratio between the distances of the sensor and of the body respectively from the centre of the lens, the body being able to move in three-dimensional space, as we said earlier.

Thus, to obtain enough data to determine the dimension of the body, it is necessary to proceed to measure with a second measurement device the distance of the body from the optical centre of the lens of the first measurement device.

The second measurement device is positioned conveniently with its optical axis at a right angle to the first device and also to the axis of the body being measured.

Other types of known devices make it possible to obviate such measurement of the distance of the body from the optical centre of the lens employed, thereby simplifying the methods of measurement considerably since it is no longer necessary to combine the data coming from the two devices so as to obtain the measurement.

For this purpose, only the luminous rays coming from the illuminated background and being substantially parallel to the optical axis of the system are used, and in this way the ratio of magnification (or reduction) is made independent of the distances.

The employment of only the rays parallel to the optical axis is obtained by providing a spatial filter, or telecentric filter, which carries out selection of the rays reaching the device from the zone of the body to be measured. Such spatial or telecentric filter consists of a stop positioned so as to coincide with the rear focal point of a lens.

In such known devices the beam of rays passing through the stop is projected onto a pair of linear sensors, each of which consists of a plurality of photosensitive elements.

Reading of the level of illumination of the various photosensitive elements is carried out by a scanning simultaneous with the storage of the luminous information in the various photosensitive elements. Thus, the various elements acquire data at different moments.

The result is that during such reading the actual value of the illumination of the individual photosensitive elements may vary, for instance, because of vibrations or movements of the body in question perpendicularly to the optical axis in such a way that precision may be reduced.

Moreover, another disadvantage of such type of devices lies in the fact that the projected image is not perfectly focused at the edges. In fact, this would require a stop having a very small aperture incompatible with the practical requirements of enough illumination of the sensors and therefore enough sensitivity.

The purpose of the present invention is to obviate the drawbacks and disadvantages of the above known devices.

A first purpose of the invention is to provide an optimum focusing of the beam of rays striking the measurement sensor. This is obtained by providing an additional lens downstream of the stop, or telecentric filter, of the device.

This lens makes parallel the rays coming from the stop and projects them onto the sensor with a magnification ratio which can be pre-set as required and be defined by the ratio between the focal length of the second lens and that of the first lens.

The image thus obtained of the parallelized rays is well defined and enables a stop to be employed with an aperture large enough to provide good luminosity without loss of definition. As a result, the sensitiveness of the device is increased as compared to the known art.

As more light is thus available, it is possible to accelerate the scanning and thus to obtain a more accurate measurement. This is particularly advantageous when we bear in mind the spe-

cific field of employment for which the device is primarily intended, namely the measurement of dimensions of bodies undergoing vibrations and displacements, such as rolled bars.

The invention provides also for the use of a sensor in which the information relating to illumination is acquired by all the photosensitive elements at one and the same time within a given acquisition time.

The means which govern the sensor and with which the device is provided, control in fact a storage "in parallel" of the luminous information in all the photosensitive elements within a determined interval.

Within a determined time a read-out "in series" of the information received by each photosensitive element is then performed.

In this way the information thus read is that stored by the various elements within the cited acquisition time.

Thus, even if the body moves between one measurement and another, the reading remains accurate since it gives the state acquired simultaneously by the various photosensitive elements at the acquisition time.

Since, as we said above, the invention provides better illumination of the sensor, it is possible to reduce the acquisition time and therefore to improve the accuracy of measurement.

Lastly, the invention provides a filter to eliminate undesired wave lengths, such as those relative to radiations of a thermal nature, for instance.

In this way the optical system is enabled to work in a limited field of frequencies which is the optimum field for the optical system itself, thus preventing aberrations and loss of definition.

All the above advantages enhance the accuracy of the device itself.

This invention is therefore obtained with a procedure to measure the dimensions of a body in movement in a three-dimensional field, in which procedure the measurement is performed by projection of an image of such body onto a sensor with photosensitive elements arranged in line and rays substantially parallel to an optical axis substantially at a right angle to the direction of movement of the body to be measured are selected by a telecentric filter, the procedure being characterized in that the luminous rays downstream of such telecentric filter are made parallel for their projection onto the sensor.

The invention is also embodied in an optoelectronic device to carry out the above procedure, such device comprising a front lens, a telecentric filter consisting of a stop positioned so as to coincide with the focus of the front lens, and a sensor with photosensitive elements arranged in line, the device being characterized in that it comprises a rear lens positioned downstream of the stop and having its front focus coinciding with the aperture of the stop.

The invention is described better with the following non-restrictive example and with the help of the attached figures, in which: –

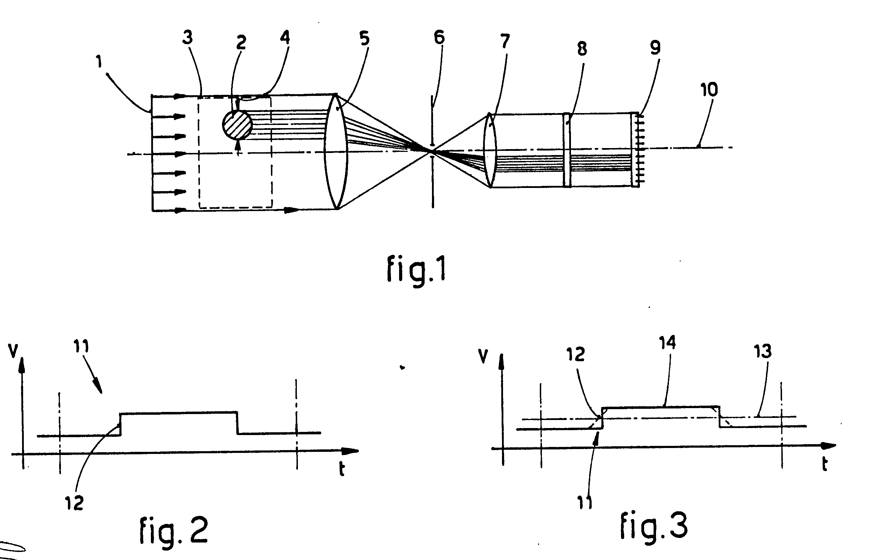

.Fig.1    is a diagram of a side view of a device according to the invention;

.Fig.2    shows the output signal in the ideal case of an unmoving body and perfectly focused rays;

.Fig.3    shows the output signal in the case of a body moving and/or not perfectly focused, and also shows the correction which can be performed on the signal.

Unless otherwise specified, we shall refer hereinafter to the case of use of the invention in the field of visible radiations, but it is to be understood that the principle of the invention can also be employed with radiations of a frequency outside the visible range provided that a suitable measurement device and suitable optical systems are provided.

Moreover, for the sake of simplicity we shall refer in the following example to measurement of the "diameter" of a body, meaning thereby a dimension, such as a thickness of a bar, etc., which is substantially at a right angle to the axis of the body and to the optical axis of the system.

Fig.1 shows diagrammatically a device according to the invention, in which 1 is a luminous contrasting background; 2 is a body of which it is desired to measure the diameter, the body being shown according to a section at a right angle to its axis of movement; 3 is a field within which the body 2 is free to move while keeping its axis always substantially at a right angle to the plane of its representation; 4 is a diameter to be measured; 5 is a front optical lens of the system, of which the usable diameter must be at least equal to the dimension,in a direction at a right angle to the optical axis 10, of the field 3 in which the measurement has to be performed; 6 is the telecentric filter, which in this example consists of a circular stop having the functions of filtering the non-parallel rays and of filtering the high spatial frequencies which would otherwise, in the form of spatial noise, disturb the image of the object projected onto the measurement sensor; 7 is a rear lens of the system, of which the usable diameter must be greater than the dimension of the sensor; 8 is an optical filter to eliminate the frequencies of the infrared near region, which could disturb the measurement if the body under examination has a rather high temperature (as in hot rolling); 9 is a linear sensor on which the image of the body to be measured is created; 10 is the optical axis of the system.

The two lenses 5 and 7 have to be positioned in relation to each other in such a way that the distance between them is the sum of their focal distances. In other words the rear focus of the lens 5 must coincide with the front focus of the lens 7.

The stop 6 must be positioned so as to coincide exactly with the two above coinciding focal points.

The ratio of magnification of the image in relation to the body is, as is known, equal to the ratio between the focal distances of the two lenses 7 and 5 respectively.

According to the invention the contrasting background 1 may have the aspect of a photoemissive or reflective screen or may be any source of incoherent light provided that it is substantially homogeneous on a plane at a right angle to the optical axis 10.

The spatial information relating to the image of the body and measured by the sensor 7 is converted in a known manner into momentary analogue information of the type shown in Fig. 2. In this case the information is obtained in the form of a voltage V.

As can be seen in Fig.2, the signal 11 can take up two levels corresponding respectively to the illumination (low signal) or obscuring (high signal) of the photosensitive elements of the sensor 9.

In fact, the greater the number of photosensitive elements included in the sensor 9 per unit of length, the more accurate the measurement.

The fact that for practical reasons the stop 6 does not have an infinitesimal diameter entails in fact some limitations as regards the positioning of the body 2 and sensor 9 in the direction of the optical axis 10.

In particular there is a plane, orthogonal to the optical axis 10 and within the field 3 of measurement, the objects positioned on which produce a perfectly focused image on the plane of the sensor 9. To such perfectly focused image there corresponds an output signal 11 of the sensor 9 which has very steep faces 12 and is therefore easy and accurate to read (Fig.2).

When the body 2 does not lie on the aforesaid plane orthogonal to the optical axis 10, the image on the sensor 9 will be out-of-focus. However, such out-of-focus condition will be less so than what occurs with known devices, given equal illumination of the sensor 9.

In correspondence with such out-of-focus condition there will be an output signal having a trapezoidal isosceles development and therefore having inclined faces 12, as shown in Fig.3.

The more distant the body 2 is from the aforesaid preferred plane, the greater will such effect be.

However, this occurrence does not impair the performance of the device to any great extent because it is of a minimal value when related to the displacement of the body from the preferred plane, and because it can be fully eliminated according to the invention by a suitable conditioning of the signal 11 generated by the sensor 9.

Such conditioning of the signal consists merely in passing the signal through a level comparator, which converts the analogue signal 11 generated by the sensor 9 into a logic signal 14.

The threshold 13 of the comparator will be preferably equal to the mean value of the two levels, maximum and minimum, of the signal.

In a like manner, when the body 2 undergoes vibrations, an output signal with a trapezoidal-type development will be obtained correspondingly. In this case too the above type of conditioning of the signal will eliminate fully any possibility of error in the measurement of the diameter of the body.

The sensor 9 employed can be, for instance, of a CCD type or the like. The behaviour of the sensor 9 will be advantageously such as to enable, as we said earlier, simultaneous storage of the information relating to the illumination in all the elementary photosensitive elements. Instead, the reading takes place "in series", that is, a reading of the various elements in succession within a pre-set reading time during which the photosensitive elements retain the information acquired previously.

— 11 —

INDEX

.1  — luminous contrast background

.2  — body to be measured

.3  — field of measurement

.4  — diameter or thickness

.5  — front lens

.6  — telecentric filter or stop

.7  — rear lens

.8  — optical filter

.9  — sensor

.10 — optical axis

.11 — signal

.12 — faces of signal

.13 — comparator threshold

.14 — logic signal.

0157431

- 12 -

<u>C L A I M S</u>

1 - Procedure to measure the dimensions of a body (2) in movement in a three-dimensional field (3), in which procedure the
measurement is performed by projection of an image of such body (2) onto a sensor (9) with photosensitive elements arranged
in line and rays substantially parallel to an optical axis
(10) substantially at a right angle to the direction of movement of the body (2) to be measured are selected by a telecentric filter (6), the procedure being characterized in that the
luminous rays downstream of such telecentric filter (6) are
made parallel (7) for their projection onto the sensor (9).

2 - Procedure to measure the dimensions of a body (2) in movement in a three-dimensional field (3) as claimed in Claim 1,
in which the information relating to the illumination is ac-
quired in parallel by the photosensitive elements of the sensor (9), the reading of the values relative to the individual
photosensitive elements being performed in series successively
to such acquisition.

3 - Procedure to measure the dimensions of a body (2) in movement in a three-dimensional field (3) as claimed in Claim 1 or
2, in which the undesired frequencies of radiation are filter-
ed (8).

4 - Procedure to measure the dimensions of a body (2) in movement in a three-dimensional field (3) as claimed in any claim
hereinbefore, in which the analogue output signal (11) of the
sensor (9) is converted into a logic signal (14) (Fig.2).

5 - Optoelectronic device to carry out the procedure according
to any of the claims hereinbefore, such device comprising a
front lens (5), a telecentric filter (6) consisting of a stop
positioned so as to coincide with the focus of the front lens
(5), and a sensor (9) with photosensitive elements arranged
in line, the device being characterized in that it comprises a rear lens (7) positioned downstream of the stop (6) and having its front focus coinciding with the aperture of the stop (6).

6 – Optoelectronic device as claimed in Claim 5, in which the front lens (5) and rear lens (7) are positioned on the same optical axis (10).

7 – Optoelectronic device as claimed in Claim 5 or 6, which comprises a preferred-frequency optical filter (8).

8 – Optoelectronic device as claimed in any of Claims 5 to 7 inclusive, which comprises governing means that control a parallel acquisition of data by the photosensitive elements of the sensor (9).

9 – Optoelectronic device as claimed in any of Claims 5 to 8 inclusive, in which the sensor (9) is of a type which can be at least likened to a CCD sensor.

fig.1

fig.2

fig.3

0157431

0157431

# EUROPEAN SEARCH REPORT

**European Patent Office**

Application number

## DOCUMENTS CONSIDERED TO BE RELEVANT

EP 85200078.5

| Category | Citation of document with indication. where appropriate, of relevant passages | Relevant to claim | CLASSIFICATION OF THE APPLICATION (Int. Cl 4) |
|---|---|---|---|
| X | DE - A - 1 798 082 (SIRA)<br>  * Page 2, line 18 - page 12, line 20; fig. 1,8 * | 1,2,5, 6,9 | G 01 B 11/10 |
| Y | | 3,4,7, 8 | |
| | -- | | |
| Y | DE - B - 1 153 541 (SCHOTT)<br>  * Totality * | 3,7 | |
| | -- | | |
| Y | DE - A1 - 3 129 890 (VEB "ERNST THALMANN)<br>  * Totality * | 4,8 | |
| | -- | | |
| A | US - A - 3 947 129 (WIKLUND)<br>  * Totality * | 1,5 | **TECHNICAL FIELDS SEARCHED (Int. Cl 4)** |
| | -- | | |
| A | CH - A5 - 569 255 (VEB "ERNST THALMANN)<br>  * Totality * | 1,5 | G 01 B 11/00 |
| | ---- | | |

The present search report has been drawn up for all claims

| Place of search | Date of completion of the search | Examiner |
|---|---|---|
| VIENNA | 28-06-1985 | TOMASELLI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82